# EUROPEAN PATENT APPLICATION

(11) **EP 4 647 311 A1**
(43) Date of publication of application: **12.11.2025**
(21) Application number: 23847759.0
(22) Date of filing: 30.12.2023
(51) Int. Cl.: B60W 30/16, B60W 30/18

(54) **CONTROL DEVICE AND CONTROL METHOD**

(30) Priority: 05.01.2023 JP 2023000746
(71) Applicant: Robert Bosch GmbH, 70442 Stuttgart (DE)
(72) Inventor: ONISHI, Yoshitsuna, Yokohama-shi, Kanagawa 2248501 (JP); OSHIDA, Yuki, Yokohama-shi, Kanagawa 224-8501 (JP)
(74) Representative: Isarpatent
(86) International application number: PCT/IB2023/063404
(87) International publication number: WO 2024/147071

(57) **Abstract**

The invention obtains a controller and a control method capable of optimizing a positional relationship between a lean vehicle and a vehicle ahead.

In the controller and the control method according to the invention, at least during an accelerator operation by a rider, an execution section of the controller executes, as rider-assistance operation to assist with driving by the rider, speed control for controlling a speed of a lean vehicle (1) such that a positional relationship between the lean vehicle (1) and a vehicle ahead (2) located ahead of the lean vehicle (1) approaches a target state that varies according to an operation amount of the accelerator operation. Furthermore, a determination section of the controller determines following safety of the lean vehicle (1) to follow the vehicle ahead (2). During execution of the speed control, in the case where the determination section determines that the following safety is lower than a standard, the execution section executes speed adjustment assistance operation as operation to assist with speed adjustment for moving the lean vehicle (1) away from the vehicle ahead (2).

## Description

### Technical Field

The present invention relates to a controller and a control method capable of optimizing a positional relationship between a lean vehicle and a vehicle ahead.

### Background Art

As a conventional technique related to a lean vehicle such as a motorcycle, a technique of assisting with driving by a rider has been available. For example, a driver-assistance system is disclosed in PTL 1. The driver assistance system warns the rider of the motorcycle that the motorcycle inappropriately approaches an obstacle on the basis of information detected by a sensor device that detects the obstacle present in a travel direction or substantially in the travel direction.

### Citation List

### Patent Literature

PTL 1: JP2009-116882A

### Summary of Invention

### Technical Problem

By the way, the following speed control has been available as rider-assistance operation to assist with driving by the rider of the lean vehicle. The speed control is executed to control a speed of the lean vehicle at least during an accelerator operation by the rider such that a positional relationship between the lean vehicle and a vehicle ahead (more specifically, a vehicle located ahead of the lean vehicle) approaches a target state that varies according to an operation amount of the accelerator operation. In such speed control, depending on the accelerator operation by the rider, a situation possibly arises where the lean vehicle travels near the vehicle ahead. Since a need for safety considerations is particularly higher for the lean vehicle than for a four-wheeled automobile and the like, there is a significant need to optimize the positional relationship between the lean vehicle and the vehicle ahead to eliminate the situation described above.

The invention has been made with the above-described problem as the background and therefore obtains a controller and a control method capable of optimizing a positional relationship between a lean vehicle and a vehicle ahead. Solution to Problem

A controller according to the invention is a controller for a rider-assistance system that assists with driving by a rider of a lean vehicle. The controller includes: an execution section that executes, as rider-assistance operation to assist with driving by the rider, speed control at least during an accelerator operation by the rider, the speed control being executed to control a speed of the lean vehicle such that a positional relationship between the lean vehicle and a vehicle ahead located ahead of the lean vehicle approaches a target state that varies according to an operation amount of the accelerator operation, and further includes: a determination section that determines following safety of the lean vehicle to follow the vehicle ahead. During execution of the speed control, in the case where the determination section determines that the following safety is lower than a standard, the execution section executes speed adjustment assistance operation that is operation to assist with speed adjustment for moving the lean vehicle away from the vehicle ahead.

A control method according to the invention is a control method for a rider-assistance system that assists with driving by a rider of a lean vehicle. The control method includes: executing, as rider-assistance operation to assist with driving by the rider, speed control by an execution section of a controller at least during an accelerator operation by the rider, the speed control being executed to control a speed of the lean vehicle such that a positional relationship between the lean vehicle and a vehicle ahead located ahead of the lean vehicle approaches a target state that varies according to an operation amount of the accelerator operation, and further includes: determining following safety of the lean vehicle to follow the vehicle ahead by a determination section of the controller. During execution of the speed control, in the case where the determination section determines that the following safety is lower than a standard, the execution section executes speed adjustment assistance operation that is operation to assist with speed adjustment for moving the lean vehicle away from the vehicle ahead.

### Advantageous Effects of Invention

In the controller and the control method according to the invention, at least during the accelerator operation by the rider, the execution section of the controller executes, as the rider-assistance operation to assist with driving by the rider, the speed control for controlling the speed of the lean vehicle such that the positional relationship between the lean vehicle and the vehicle ahead located ahead of the lean vehicle approaches the target state that varies according to the operation amount of the accelerator operation. Furthermore, the determination section of the controller determines the following safety of the lean vehicle to follow the vehicle ahead. During the execution of the speed control, in the case where the determination section determines that the following safety is lower than the standard, the execution section executes the speed adjustment assistance operation that is the operation to assist with the speed adjustment for moving the lean vehicle away from the vehicle ahead. As a result, during the execution of the speed control, even in the case where a situation arises where the lean vehicle travels near the vehicle ahead, such a situation can be eliminated by executing the speed adjustment assistance operation. Therefore, it is possible to optimize the positional relationship between the lean vehicle and the vehicle ahead.

### Brief Description of Drawings

Fig. 1 is a schematic view illustrating an outline configuration of a lean vehicle according to an embodiment of the invention.
Fig. 2 is a block diagram illustrating an example of a functional configuration of a controller according to the embodiment of the invention.
Fig. 3 is a view illustrating a situation where the lean vehicle according to the embodiment of the invention and a vehicle ahead are traveling.
Fig. 4 is a flowchart illustrating an example of a processing procedure that is executed by the controller according to the embodiment of the invention.
Fig. 5 is a view illustrating a situation where the lean vehicle according to the embodiment of the invention and the vehicle ahead are cornering.

### Description of Embodiments

A description will hereinafter be made on a controller and a control method according to the invention with reference to the drawings.

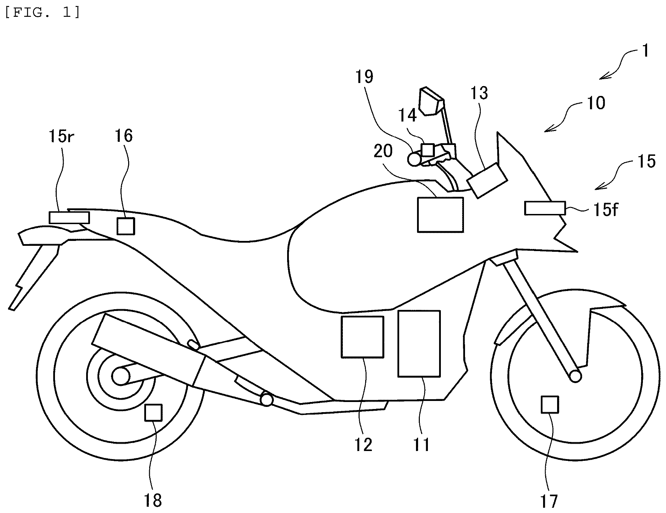

The following description will be made on the controller that is used for a two-wheeled motorcycle (see a lean vehicle 1 in Fig. 1). However, a vehicle as a control target of the controller according to the invention only needs to be a lean vehicle, and may be a lean vehicle other than the two-wheeled motorcycle. The lean vehicle means a vehicle, a body of which is tilted to the right when turning in a right direction and is tilted to the left when turning in a left direction. Examples of the lean vehicle are motorcycles (a two-wheeled motor vehicle and a three-wheeled motor vehicle). The motorcycles include a vehicle having an engine as a power source, a vehicle having an electric motor as the power source, and the like. Examples of the motorcycles are a motorbike, a scooter, and an electric scooter.

In addition, a description will hereinafter be made on a case where the engine (more specifically, an engine 11 in Fig. 1, which will be described below) is mounted as a drive source that can output power for driving a wheel. However, as the drive source, a drive source other than the engine (for example, the electric motor) may be mounted, or plural drive sources may be mounted.

Furthermore, the following description will be made on a case where a control unit (more specifically, a hydraulic pressure control unit 12 in Fig. 1, which will be described below) that controls a hydraulic pressure of a brake fluid is adopted as a control unit for a braking force generated on a wheel. However, a control unit (a so-called brake-by-wire) that controls a position of a braking section itself of the wheel by an electric signal may be adopted as the control unit for the braking force generated on the wheel.

A configuration, operation, and the like, which will be described below, merely constitute one example. The controller and the control method according to the invention are not limited to a case with such a configuration, such operation, and the like.

The same or similar description will appropriately be simplified or will not be made below. In the drawings, the same or similar members or portions will not be denoted by a reference sign or will be denoted by the same reference sign. A detailed structure will appropriately be illustrated in a simplified manner or will not be illustrated.

### <Configuration of Lean Vehicle>

A description will be made on a configuration of the lean vehicle 1 according to an embodiment of the invention with reference to Fig. 1 to Fig. 3.

Fig. 1 is a schematic view illustrating an outline configuration of the lean vehicle 1. The lean vehicle 1 is a two-wheeled motorcycle that corresponds to an example of the lean vehicle according to the invention. As illustrated in Fig. 1, the lean vehicle 1 includes the engine 11, the hydraulic pressure control unit 12, a display device 13, an input device 14, a surrounding environment sensor 15, an inertial measurement unit (IMU) 16, a front-wheel rotational frequency sensor 17, a rear-wheel rotational frequency sensor 18, an accelerator grip 19, and a controller (ECU) 20. The surrounding environment sensor 15 includes a front surrounding environment sensor 15f and a rear surrounding environment sensor 15r.

A rider-assistance system 10 that assists with driving by a rider of the lean vehicle 1 includes the above components (more specifically, the engine 11, the hydraulic pressure control unit 12, the display device 13, the input device 14, the surrounding environment sensor 15, the IMU 16, the front-wheel rotational frequency sensor 17, the rear-wheel rotational frequency sensor 18, the accelerator grip 19, and the controller 20).

The engine 11 corresponds to an example of a drive source of the lean vehicle 1 and can output power for driving a wheel. For example, the engine 11 is provided with: one or plural cylinders, each of which is formed with a combustion chamber therein; a fuel injector that injects fuel into the combustion chamber; and an ignition plug. When the fuel is injected from the fuel injector, air-fuel mixture containing air and the fuel is produced in the combustion chamber, and the air-fuel mixture is then ignited by the ignition plug and burned. Consequently, a piston provided in the cylinder reciprocates to cause a crankshaft to rotate. In addition, a throttle valve is provided to an intake pipe of the engine 11, and an intake air amount to the combustion chamber varies according to a throttle opening amount as an opening amount of the throttle valve.

The hydraulic pressure control unit 12 is a unit that has a function to control a braking force generated on the wheel. For example, the hydraulic pressure control unit 12 includes components (for example, a control valve and a pump) that are provided on an oil channel connecting a master cylinder and a wheel cylinder and control a brake hydraulic pressure in the wheel cylinder. The braking force generated on the wheel is controlled when operation of the components in the hydraulic pressure control unit 12 is controlled. The hydraulic pressure control unit 12 may control the braking force generated on each of a front wheel and a rear wheel or may only control the braking force generated on one of the front wheel and the rear wheel.

The display device 13 has a display function to display information visually. An example of the display device 13 is a liquid-crystal display. For example, the display device 13 is provided in front of a handlebar in the lean vehicle 1. However, arrangement of the display device 13 to the vehicle body is not particularly limited.

The input device 14 accepts various operations by the rider. For example, the input device 14 is provided to the handlebar and includes a push button and the like that are used for the rider's operation. Information on the rider's operation using the input device 14 is output to the controller 20.

The surrounding environment sensor 15 detects surrounding environment information on environment around the lean vehicle 1. The front surrounding environment sensor 15f is provided to a front portion of the lean vehicle 1 and detects the surrounding environment information in front of the lean vehicle 1. The rear surrounding environment sensor 15r is provided to a rear portion of the lean vehicle 1 and detects the surrounding environment information behind the lean vehicle 1. The surrounding environment information that is detected by each of the surrounding environment sensors 15 is output to the controller 20.

The surrounding environment information that is detected by the surrounding environment sensor 15 may be information on a distance to or an orientation of a target object that is located around the lean vehicle 1 (for example, a relative position, a relative distance, a relative speed, relative acceleration, or the like), or may be a characteristic of the target object that is located around the lean vehicle 1 (for example, a type of the target object, a shape of the target object itself, a mark on the target object, or the like). Examples of the surrounding environment sensor 15 are a radar, a Lidar sensor, an ultrasonic sensor, and a camera.

The surrounding environment information can also be detected by a surrounding environment sensor that is mounted to another vehicle or by an infrastructure facility. In other words, the controller 20 can also acquire the surrounding environment information via wireless communication with the other vehicle or the infrastructure facility.

The IMU 16 includes a three-axis gyroscope sensor and a three-directional acceleration sensor, and detects a posture of the lean vehicle 1. The IMU 16 is provided to a trunk of the lean vehicle 1, for example. For example, the IMU 16 detects a lean angle of the lean vehicle 1 and outputs a detection result. The IMU 16 may detect another physical quantity that can substantially be converted to the lean angle of the lean vehicle 1. The lean angle corresponds to an angle that represents a tilt in a rolling direction of the body (more specifically, the trunk) of the lean vehicle 1 with respect to an upper vertical direction. The IMU 16 may only include parts of the three-axis gyroscope sensor and the three-directional acceleration sensor.

The front-wheel rotational frequency sensor 17 is a wheel rotational frequency sensor that detects a rotational frequency of the front wheel (for example, a rotational frequency of the front wheel per unit time [rpm], a travel distance of the front wheel per unit time [km/h], or the like), and outputs a detection result. The front-wheel rotational frequency sensor 17 may detect another physical quantity that can substantially be converted to the rotational frequency of the front wheel. The front-wheel rotational frequency sensor 17 is provided to the front wheel.

The rear-wheel rotational frequency sensor 18 is a wheel rotational frequency sensor that detects a rotational frequency of the rear wheel (for example, the rotational frequency of the rear wheel per unit time [rpm], a travel distance of the rear wheel per unit time [km/h], or the like), and outputs a detection result. The rear-wheel rotational frequency sensor 18 may detect another physical quantity that can substantially be converted to the rotational frequency of the rear wheel. The rear-wheel rotational frequency sensor 18 is provided to the rear wheel.

The accelerator grip 19 accepts an accelerator operation (that is, an operation to accelerate the lean vehicle 1) by the rider. The accelerator grip 19 is provided to the handlebar and is grasped by the rider. An operation to rotate the accelerator grip 19 corresponds to the accelerator operation. Information on an operation amount of the accelerator operation is output to the controller 20.

The controller 20 controls the rider-assistance system 10. For example, a part or whole of the controller 20 is a microcomputer, a microprocessor unit, or the like. Alternatively, the part or the whole of the controller 20 may be one whose firmware and the like can be updated, or may be a program module or the like that is executed by a command from a CPU or the like, for example. The controller 20 may be provided as one unit or may be divided into plural units, for example.

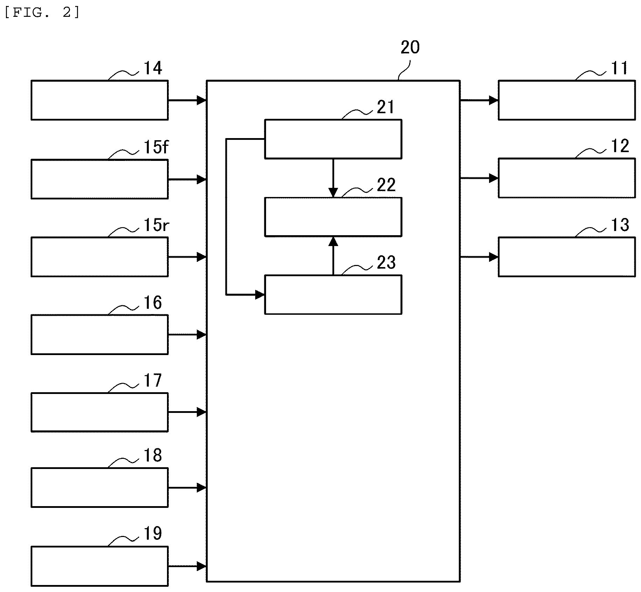

Fig. 2 is a block diagram illustrating an example of a functional configuration of the controller 20. As illustrated in Fig. 2, the controller 20 includes an acquisition section 21, an execution section 22, and a determination section 23, for example. The controller 20 communicates with each of the devices in the rider-assistance system 10.

The acquisition section 21 acquires the information from each of the devices in the rider-assistance system 10, and outputs the acquired information to the execution section 22 and the determination section 23. For example, the acquisition section 21 acquires the information from the input device 14, the front surrounding environment sensor 15f, the rear surrounding environment sensor 15r, the IMU 16, the front-wheel rotational frequency sensor 17, the rear-wheel rotational frequency sensor 18, and the accelerator grip 19. In the present specification, the acquisition of the information can include extraction, generation (for example, calculation), and the like of the information.

The execution section 22 executes various types of control by controlling operation of each of the devices in the rider-assistance system 10. For example, the execution section 22 controls the operation of the engine 11, the hydraulic pressure control unit 12, and the display device 13.

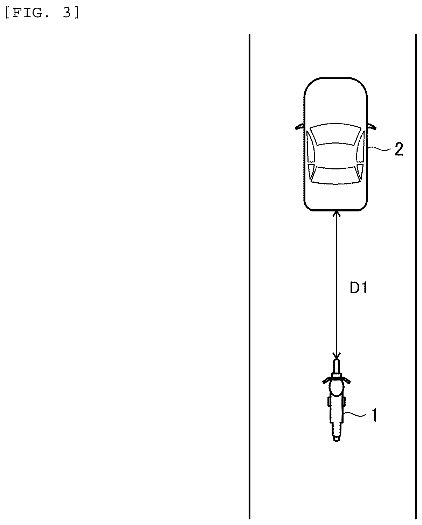

Here, the execution section 22 can execute speed control for controlling a speed of the lean vehicle 1 (hereinafter also simply referred to as the speed control) such that a positional relationship between the lean vehicle 1 and a vehicle ahead approaches a target state that varies according to the operation amount of the accelerator operation by the rider. The vehicle ahead is a vehicle that is located ahead of the lean vehicle 1. The speed control is executed at least during the accelerator operation by the rider. The execution section 22 initiates the speed control with the rider's operation using the input device 14 as a trigger, for example. The speed control can correspond to rider-assistance operation to assist with driving by the rider. A description will hereinafter be made on an overview of the speed control with reference to Fig. 3.

Fig. 3 is a view illustrating a situation where the lean vehicle 1 and a vehicle ahead 2 are traveling. As illustrated in Fig. 3, the vehicle ahead 2 travels in the same lane as a travel lane of the lean vehicle 1 and is located ahead of the lean vehicle 1. In the example illustrated in Fig. 3, the vehicle ahead 2 corresponds to a positional relationship adjustment target in the speed control. In the example illustrated in Fig. 3, the vehicle ahead 2 is a four-wheeled automobile. However, the positional relationship adjustment target in the speed control may be a vehicle other than the four-wheeled automobile (for example, a lean vehicle or the like).

In the example illustrated in Fig. 3, during execution of the speed control, for example, the execution section 22 controls the speed of the lean vehicle 1 such that an inter-vehicle distance D1 between the lean vehicle 1 and the vehicle ahead 2 approaches a target inter-vehicle distance. As a result, a positional relationship between the lean vehicle 1 and the vehicle ahead 2 is adjusted to approach the target state where the inter-vehicle distance D1 matches the target inter-vehicle distance. The execution section 22 can control the speed of the lean vehicle 1, for example, on the basis of information on the speed of the lean vehicle 1 that is acquired on the basis of the rotational frequency of the front wheel and the rotational frequency of the rear wheel.

Here, the inter-vehicle distance D1 may mean a distance in a direction along a lane (more specifically, the travel lane of the lean vehicle 1), or may mean a linear distance. For example, the acquisition section 21 acquires the inter-vehicle distance D1 between the lean vehicle 1 and the vehicle ahead 2 on the basis of the surrounding environment information of the lean vehicle 1. Then, based on the thus-acquired inter-vehicle distance D1, the execution section 22 can control the speed of the lean vehicle 1 as described above.

Here, the target state varies according to the operation amount of the accelerator operation by the rider. The operation amount of the accelerator operation can be acquired from the accelerator grip 19. In the example illustrated in Fig. 3, as the operation amount of the accelerator operation is increased, the target inter-vehicle distance, which is a target value of the inter-vehicle distance D1 between the lean vehicle 1 and the vehicle ahead 2, is reduced, for example. Thus, depending on the accelerator operation by the rider, a situation possibly arises where the lean vehicle 1 travels near the vehicle ahead 2.

Hereinafter, a description will mainly be made on an example in which, in the speed control, the speed of the lean vehicle 1 is controlled such that the inter-vehicle distance D1 between the lean vehicle 1 and the vehicle ahead 2 approaches the target inter-vehicle distance, and the positional relationship between the lean vehicle 1 and the vehicle ahead 2 is thereby adjusted to approach the target state. However, in the speed control, the execution section 22 may control the speed of the lean vehicle 1 such that a passing time difference (more specifically, a time required for the lean vehicle 1 to pass a current location of the vehicle ahead 2 from a current time point) approaches a target passing time difference, for example. In this case, a state where the passing time difference matches the target passing time difference corresponds to the target state of the positional relationship between the lean vehicle 1 and the vehicle ahead 2. For example, the acquisition section 21 acquires the passing time difference on the basis of the surrounding environment information of the lean vehicle 1. Then, based on the thus-acquired passing time difference, the execution section 22 can control the speed of the lean vehicle 1 as described above.

The determination section 23 makes various determinations. A determination result by the determination section 23 is output to the execution section 22 and is used for processing executed by the execution section 22.

### <Operation of Controller>

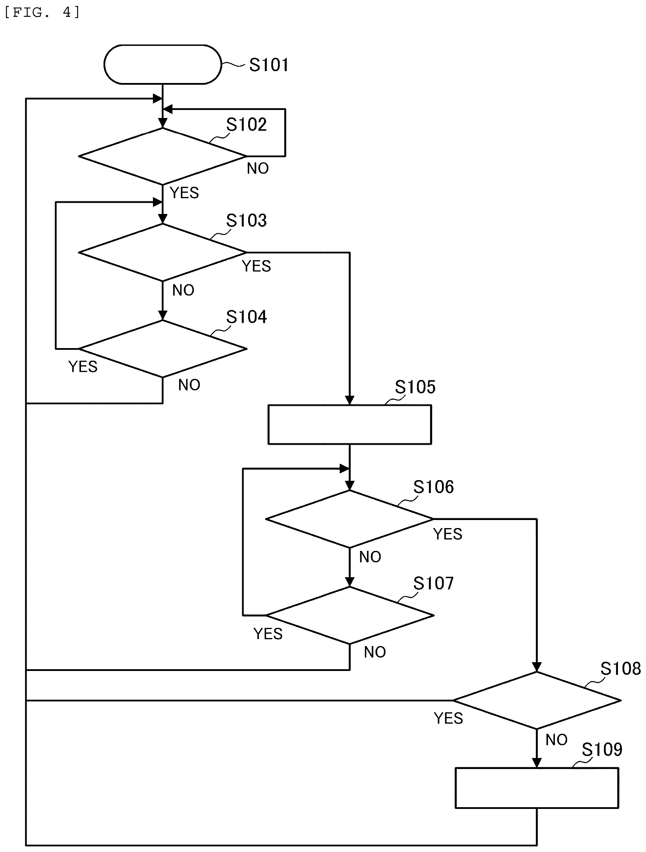

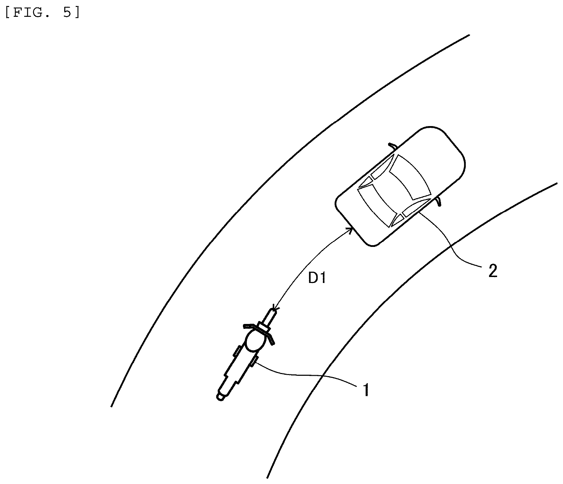

A description will be made on operation of the controller 20 according to the embodiment of the invention with reference to Fig. 4 and Fig. 5.

Fig. 4 is a flowchart illustrating an example of a processing procedure that is executed by the controller 20. Step S101 in Fig. 4 corresponds to initiation of a control flow illustrated in Fig. 4. The control flow illustrated in Fig. 4 is executed during the execution of the speed control.

When the control flow illustrated in Fig. 4 is initiated, in step S102, the determination section 23 determines whether following safety of the lean vehicle 1 to follow the vehicle ahead 2 is lower than a standard.

The following safety in step S102 means safety at the time when the lean vehicle 1 travels by following the vehicle ahead 2. For example, the following case corresponds to the case where the following safety is lower than the standard. In such a case, it is determined that the lean vehicle 1 possibly collides with the vehicle ahead 2 (that is, there is a potential collision possibility) when the vehicle ahead 2 brakes suddenly while the lean vehicle 1 travels by following the vehicle ahead 2.

In step S102, more specifically, the determination section 23 determines the following safety on the basis of positional relationship information that is information on the positional relationship between the lean vehicle 1 and the vehicle ahead 2. As will be described later, in the case where it is determined that the following safety is lower than the standard, speed adjustment assistance operation is executed. The speed adjustment assistance operation is operation to assist with speed adjustment for moving the lean vehicle 1 away from the vehicle ahead 2 (hereinafter also simply referred to as the speed adjustment) . As a result, the situation where the lean vehicle 1 travels near the vehicle ahead 2 can be eliminated during the execution of the speed control.

Here, the positional relationship information between the lean vehicle 1 and another vehicle can include information on the relative position, the relative distance, the relative speed, the relative acceleration, or relative jerk of the lean vehicle 1 to the other vehicle, information on the passing time difference between the lean vehicle 1 and the other vehicle, or the like, for example. However, the positional relationship information may be information on another physical quantity that can substantially be converted to any of these pieces of the information. The positional relationship information can be acquired on the basis of the surrounding environment information that is acquired by the surrounding environment sensor 15 or the like, for example.

The determination section 23 may determine the following safety on the basis of density information as the positional relationship information, for example. The density information is information on density between the lean vehicle 1 and the vehicle ahead 2 (more specifically, information on a degree of proximity between the lean vehicle 1 and the vehicle ahead 2).

For example, the determination section 23 determines that the following safety is lower than the standard in the case where the inter-vehicle distance information between the lean vehicle 1 and the vehicle ahead 2 as the density information is information indicating that the inter-vehicle distance D1 between the lean vehicle 1 and the vehicle ahead 2 is shorter than a reference distance. For example, the reference distance is a short distance to such extent that it can be determined that the lean vehicle 1 possibly collides with the vehicle ahead 2 when the vehicle ahead 2 brakes suddenly (for example, a minimum distance that does not cause tailgating).

The acquisition section 21 can acquire the inter-vehicle distance information on the basis of the surrounding environment information of the lean vehicle 1 (for example, the information acquired by the front surrounding environment sensor 15f). The inter-vehicle distance information may be information on the inter-vehicle distance D1 between the lean vehicle 1 and the vehicle ahead 2, or may be another type of information that can substantially be converted to the inter-vehicle distance D1 between the lean vehicle 1 and the vehicle ahead 2.

Alternatively, for example, the determination section 23 determines that the following safety is lower than the standard in the case where passing time difference information between the lean vehicle 1 and the vehicle ahead 2 as the density information is information indicating that the passing time difference between the lean vehicle 1 and the vehicle ahead 2 is shorter than a reference time difference. For example, the reference time difference is a short time difference to such extent that it can be determined that the lean vehicle 1 possibly collides with the vehicle ahead 2 when the vehicle ahead 2 brakes suddenly (for example, a minimum time difference that does not cause tailgating).

The acquisition section 21 can acquire the passing time difference information on the basis of the surrounding environment information of the lean vehicle 1 (for example, the information acquired by the front surrounding environment sensor 15f). The passing time difference information may be information on the passing time difference between the lean vehicle 1 and the vehicle ahead 2, or may be another type of information that can substantially be converted to the passing time difference between the lean vehicle 1 and the vehicle ahead 2.

The determination section 23 may determine the following safety on the basis of stability information as the positional relationship information, for example. The stability information is information on stability of the inter-vehicle distance D1 between the lean vehicle 1 and the vehicle ahead 2.

For example, the determination section 23 determines that the following safety is lower than the standard in the case where relative speed information between the lean vehicle 1 and the vehicle ahead 2 as the stability information is information indicating that an absolute value of the relative speed between the lean vehicle 1 and the vehicle ahead 2 is lower than a reference speed. For example, the reference speed is a speed near 0 km/h (more specifically, a slightly higher value than 0 km/h). In the case where the absolute value of the relative speed is lower than the reference speed, the lean vehicle 1 travels while keeping the substantially constant inter-vehicle distance D1 from the vehicle ahead 2. In such a case, when the vehicle ahead 2 brakes suddenly, the lean vehicle 1 possibly collides with the vehicle ahead 2.

The acquisition section 21 can acquire the relative speed information on the basis of the surrounding environment information of the lean vehicle 1 (for example, the information acquired by the front surrounding environment sensor 15f). The relative speed information may be information on the relative speed between the lean vehicle 1 and the vehicle ahead 2 (for example, the relative speed of the lean vehicle 1 to the vehicle ahead 2), or may be another type of information that can substantially be converted to the relative speed between the lean vehicle 1 and the vehicle ahead 2 (for example, a standard deviation of the relative distance between the lean vehicle 1 and the vehicle ahead 2 at plural time points, or the like).

The above description has been made on the example in which the following safety is determined on the basis of the density information and the example in which the following safety is determined on the basis of the stability information. However, the determination section 23 may determine the following safety on the basis of both of the density information and the stability information.

For example, the determination section 23 may determine the following safety on the basis of the inter-vehicle distance information as the density information and on the basis of the relative speed information as the stability information. In this case, for example, the determination section 23 determines that the following safety is lower than the standard in the case where the inter-vehicle distance information is the information indicating that the inter-vehicle distance D1 between the lean vehicle 1 and the vehicle ahead 2 is shorter than the reference distance and where the relative speed information is information indicating that the absolute value of the relative speed between the lean vehicle 1 and the vehicle ahead 2 is lower than the reference speed.

Alternatively, for example, the determination section 23 may determine the following safety on the basis of the passing time difference information as the density information and on the basis of the relative speed information as the stability information. In this case, for example, the determination section 23 determines that the following safety is lower than the standard in the case where the passing time difference information is the information indicating that the passing time difference between the lean vehicle 1 and the vehicle ahead 2 is shorter than the reference time difference and where the relative speed information is the information indicating that the absolute value of the relative speed between the lean vehicle 1 and the vehicle ahead 2 is lower than the reference speed.

The above description has been made on the example in which the following case corresponds to the case where the following safety is lower than the standard. In such a case, it is determined that the lean vehicle 1 possibly collides with the vehicle ahead 2 (that is, there is the potential collision possibility) when the vehicle ahead 2 brakes suddenly while the lean vehicle 1 travels by following the vehicle ahead 2. However, the following case may correspond to the case where the following safety is lower than the standard. In such a case, based on the relative position, the relative distance, the relative speed, the relative acceleration, or the like between the lean vehicle 1 and the vehicle ahead 2, it is determined that the lean vehicle 1 possibly collides with the vehicle ahead 2 even when the vehicle ahead 2 does not brake suddenly.

If it is determined that the following safety of the lean vehicle 1 to follow the vehicle ahead 2 is higher than the standard (step S102/NO), the processing in step S102 is repeated. On the other hand, if it is determined that the following safety of the lean vehicle 1 to follow the vehicle ahead 2 is lower than the standard (step S102/YES), the processing proceeds to step S103.

If it is determined YES in step S102, in step S103, the determination section 23 determines whether a reference time has elapsed from a time point at which it is determined YES in step S102.

If it is determined that the reference time has not elapsed from the time point at which it is determined YES in step S102 (step S103/NO), the processing proceeds to step S104. On the other hand, if it is determined that the reference time has elapsed from the time point at which it is determined YES in step S102 (step S103/YES), the processing proceeds to step S105.

If it is determined NO in step S103, in step S104, the determination section 23 determines whether the following safety of the lean vehicle 1 to follow the vehicle ahead 2 is lower than the standard. The processing in step S104 is the same as the processing in step S102.

If it is determined that the following safety of the lean vehicle 1 to follow the vehicle ahead 2 is higher than the standard (step S104/NO), the processing returns to step S102. On the other hand, if it is determined that the following safety of the lean vehicle 1 to follow the vehicle ahead 2 is lower than the standard (step S104/YES), the processing returns to step S103.

In the case where it is determined YES in step S102 as described above and where the determination that the following safety of the lean vehicle 1 to follow the vehicle ahead 2 is lower than the standard continues for a shorter time than the reference time, it is determined NO in step S104. Then, the processing returns to step S102 instead of proceeding to step S105. On the other hand, in the case where the determination that the following safety of the lean vehicle 1 to the vehicle ahead 2 is lower than the standard continues for the reference time or longer, it is determined YES in step S103, and the processing proceeds to step S105.

In the processing in step S105 onward, as will be described below, the execution section 22 executes the speed adjustment assistance operation that is the rider-assistance operation for moving the lean vehicle 1 away from the vehicle ahead 2. In other words, in the case where the determination that the following safety of the lean vehicle 1 to follow the vehicle ahead 2 is lower than the standard continues for the shorter time than the reference time, the execution section 22 does not execute the speed adjustment assistance operation.

If it is determined YES in step S103, in step S105, the execution section 22 executes first speed adjustment assistance operation as the speed adjustment assistance operation, which is the operation to assist with the speed adjustment for moving the lean vehicle 1 away from the vehicle ahead 2.

The first speed adjustment assistance operation is operation to make a notification that instructs the rider to perform a speed adjustment operation. The speed adjustment operation that is instructed by the first speed adjustment assistance operation is an operation to reduce the operation amount of the accelerator operation, for example. When the rider performs the thus-instructed operation, the target inter-vehicle distance in the speed control is increased. As a result, the lean vehicle 1 can be moved away from the vehicle ahead 2.

However, the speed adjustment operation, which is instructed by the first speed adjustment assistance operation, may be an operation other than the above operation. For example, the speed adjustment operation, which is instructed by the first speed adjustment assistance operation, may be a brake operation (that is, an operation to generate the braking force to the lean vehicle 1 or an operation to increase the braking force generated to the lean vehicle 1).

For example, in the first speed adjustment assistance operation, the execution section 22 causes the display device 13 to display the instruction on the speed adjustment operation. However, the first speed adjustment assistance operation is not limited to this example. The notification that instructs the rider to perform the speed adjustment operation only needs to be made by any suitable method. That is, the notification in the first speed adjustment assistance operation can be made by any of various methods.

For example, as in the above example using the display device 13, the notification in the first speed adjustment assistance operation may be displayed. The notification that is displayed in the first speed adjustment assistance operation may be made by using the display device 13 mounted to the lean vehicle 1, or may be made by using a display device mounted to a worn article (such as a helmet) by the rider.

Alternatively, for example, the notification in the first speed adjustment assistance operation may be made by sound. The notification by the sound in the first speed adjustment assistance operation may be made by using a sound output device mounted to the lean vehicle 1, or may be made by using a sound output device mounted to the worn article (such as the helmet) by the rider.

Further alternatively, for example, the notification in the first speed adjustment assistance operation may be made by vibrations. The notification by the vibrations in the first speed adjustment assistance operation may be made by using a vibration generator mounted to the lean vehicle 1, or may be made by using a vibration generator mounted to the worn article (such as the helmet) by the rider. As an example of making the notification in the first speed adjustment assistance operation by the vibrations, the execution section 22 may output a control command to a control section that controls rotation of the accelerator grip 19, and the accelerator grip 19 may thereby be vibrated, for example.

Further alternatively, for example, the notification in the first speed adjustment assistance operation may be made by instantaneous deceleration of the lean vehicle 1. In this case, the lean vehicle 1 may be decelerated instantaneously by using a control unit (such as the hydraulic pressure control unit 12) for the braking force generated on the wheel, by using the drive source (such as the engine 11) of the lean vehicle 1, or by using a transmission mechanism of the lean vehicle 1.

The above description has been made on the examples of the various methods for making the notification in the first speed adjustment assistance operation. However, the notification in the first speed adjustment assistance operation may be made by combining any of the plural methods. For example, the notification in the first speed adjustment assistance operation may be made by the display and the sound.

Following step S105, in step S106, the determination section 23 determines whether a reference time has elapsed from a time point at which the first speed adjustment assistance operation is initiated in step S105.

The reference time in step S106 may be the same as the reference time in step S103, may be shorter than the reference time in step S103, or may be longer than the reference time in step S103.

If it is determined that the reference time has not elapsed from the time point at which the first speed adjustment assistance operation is initiated (step S106/NO), the processing proceeds to step S107. On the other hand, if it is determined that the reference time has elapsed from the time point at which the first speed adjustment assistance operation is initiated (step S106/YES), the processing proceeds to step S108.

If it is determined NO in step S106, in step S107, the determination section 23 determines whether the following safety of the lean vehicle 1 to follow the vehicle ahead 2 is lower than the standard.

The processing in step S107 is the same as the processing in step S102 and step S104. The standard of the following safety in step S107 may be the same as the standard of the following safety in step S102 and step S104, or may be a higher standard than the standard of the following safety in step S102 and step S104.

If it is determined that the following safety of the lean vehicle 1 to follow the vehicle ahead 2 is higher than the standard (step S107/NO), the processing returns to step S102. On the other hand, if it is determined that the following safety of the lean vehicle 1 to follow the vehicle ahead 2 is lower than the standard (step S107/YES), the processing returns to step S106.

As described above, in the case where the determination that the following safety of the lean vehicle 1 to follow the vehicle ahead 2 is lower than the standard continues for the shorter time than the reference time after the initiation of the first speed adjustment assistance operation in step S105, it is determined NO in step S107. Then, the processing returns to step S102 instead of proceeding to step S108. On the other hand, in the case where the determination that the following safety of the lean vehicle 1 to the vehicle ahead 2 is lower than the standard continues for the reference time or longer, it is determined YES in step S106, and the processing proceeds to step S108.

If it is determined NO in step S107, the first speed adjustment assistance operation is terminated. On the other hand, if it is determined YES in step S106, and the processing proceeds to step S108, the first speed adjustment assistance operation may continuously be executed during execution of second speed adjustment assistance operation, which will be described below, or may be terminated upon initiation of the second speed adjustment assistance operation. However, if it is determined YES in step S108, which will be described below, and the processing returns to step S102, the first speed adjustment assistance operation is terminated.

Here, the standard of the following safety in step S107 is preferably higher than the standard of the following safety in step S102 and step S104. For example, in the example in which the inter-vehicle distance D1 between the lean vehicle 1 and the vehicle ahead 2 is shorter than the reference distance and it is thus determined that the following safety of the lean vehicle 1 to follow the vehicle ahead 2 is lower than the standard, the reference distance in step S107 is preferably longer than the reference distance in step S102 and step S104. In addition, for example, in the example in which the passing time difference between the lean vehicle 1 and the vehicle ahead 2 is shorter than the reference time difference and it is thus determined that the following safety of the lean vehicle 1 to follow the vehicle ahead 2 is lower than the standard, the reference time difference in step S107 is preferably longer than the reference time difference in step S102 and step S104. In this way, it is possible to prevent the immediate determination of YES in step S102 after it is determined NO in step S107 and the processing returns to step S102. As a result, it is possible to prevent the frequent execution of the first speed adjustment assistance operation.

In the processing in step S108 onward, as will be described below, the execution section 22 can execute the second speed adjustment assistance operation as the speed adjustment assistance operation. In other words, the execution section 22 does not execute the second speed adjustment assistance operation in the case where the determination that the following safety of the lean vehicle 1 to follow the vehicle ahead 2 is lower than the standard only continues for the shorter time than the reference time after the initiation of the first speed adjustment assistance operation in step S105.

If it is determined YES in step S106, in step S108, the determination section 23 determines whether following safety of a vehicle behind to follow the lean vehicle 1 is lower than a standard. The vehicle behind is a vehicle that is located behind the lean vehicle 1.

The following safety in step S108 means safety at the time when the lean vehicle 1 travels by being followed by the vehicle behind. For example, the following case corresponds to the case where the following safety is lower than the standard. In such a case, it is determined that the vehicle behind possibly collides with the lean vehicle 1 (that is, there is a potential collision possibility) when the lean vehicle 1 brakes suddenly while the lean vehicle 1 travels by being followed by the vehicle behind.

In step S108, more specifically, the determination section 23 determines the following safety on the basis of positional relationship information that is information on a positional relationship between the lean vehicle 1 and the vehicle behind.

The determination section 23 may determine the following safety described above on the basis of density information as the positional relationship information, for example. The density information is information on density between the lean vehicle 1 and the vehicle behind.

For example, the determination section 23 determines that the following safety is lower than the standard in the case where inter-vehicle distance information between the lean vehicle 1 and the vehicle behind as the density information is information indicating that an inter-vehicle distance between the lean vehicle 1 and the vehicle behind is shorter than a reference distance. For example, the reference distance is a short distance to such extent that it can be determined that the vehicle behind possibly collides with the lean vehicle 1 when the lean vehicle 1 brakes suddenly (for example, a minimum distance that does not cause tailgating).

The acquisition section 21 can acquire the inter-vehicle distance information on the basis of the surrounding environment information of the lean vehicle 1 (for example, the information acquired by the rear surrounding environment sensor 15r). The inter-vehicle distance information may be information on the inter-vehicle distance between the lean vehicle 1 and the vehicle behind, or may be another type of information that can substantially be converted to the inter-vehicle distance between the lean vehicle 1 and the vehicle behind.

Alternatively, for example, the determination section 23 determines that the following safety is lower than the standard in the case where passing time difference information between the lean vehicle 1 and the vehicle behind as the density information is information indicating that a passing time difference between the lean vehicle 1 and the vehicle behind is shorter than a reference time difference. For example, the reference time difference is a short time difference to such extent that it can be determined that the vehicle behind possibly collides with the lean vehicle 1 when the lean vehicle 1 brakes suddenly (for example, a minimum time difference that does not cause tailgating).

The acquisition section 21 can acquire the passing time difference information on the basis of the surrounding environment information of the lean vehicle 1 (for example, the information acquired by the rear surrounding environment sensor 15r). The passing time difference information may be information on the passing time difference between the lean vehicle 1 and the vehicle behind, or may be another type of information that can substantially be converted to the passing time difference between the lean vehicle 1 and the vehicle behind.

The determination section 23 may determine the following safety on the basis of stability information as the positional relationship information, for example. The stability information is information on stability of the inter-vehicle distance between the lean vehicle 1 and the vehicle behind.

For example, the determination section 23 determines that the following safety is lower than the standard in the case where relative speed information between the lean vehicle 1 and the vehicle behind as the stability information is information indicating that an absolute value of a relative speed between the lean vehicle 1 and the vehicle behind is lower than a reference speed. For example, the reference speed is the speed near 0 km/h (more specifically, the slightly higher value than 0 km/h). In the case where the absolute value of the relative speed is lower than the reference speed, the vehicle behind travels while keeping the substantially constant inter-vehicle distance from the lean vehicle 1. In such a case, when the lean vehicle 1 brakes suddenly, the vehicle behind possibly collides with the lean vehicle 1.

The acquisition section 21 can acquire the relative speed information on the basis of the surrounding environment information of the lean vehicle 1 (for example, the information acquired by the rear surrounding environment sensor 15r). The relative speed information may be information on the relative speed between the lean vehicle 1 and the vehicle behind (for example, a relative speed of the lean vehicle 1 to the vehicle behind), or may be another type of information that can substantially be converted to the relative speed between the lean vehicle 1 and the vehicle behind (for example, a standard deviation of the relative distance between the lean vehicle 1 and the vehicle behind at plural time points, or the like).

The above description has been made on the example in which the following safety is determined on the basis of the density information and the example in which the following safety is determined on the basis of the stability information. However, the determination section 23 may determine the following safety on the basis of both of the density information and the stability information.

For example, the determination section 23 may determine the following safety on the basis of the inter-vehicle distance information as the density information and on the basis of the relative speed information as the stability information. In this case, for example, the determination section 23 determines that the following safety is lower than the standard in the case where the inter-vehicle distance information is the information indicating that the inter-vehicle distance between the lean vehicle 1 and the vehicle behind is shorter than the reference distance and where the relative speed information is the information indicating that the absolute value of the relative speed between the lean vehicle 1 and the vehicle behind is lower than the reference speed.

Alternatively, for example, the determination section 23 may determine the following safety on the basis of the passing time difference information as the density information and on the basis of the relative speed information as the stability information. In this case, for example, the determination section 23 determines that the following safety is lower than the standard in the case where the passing time difference information is the information indicating that the passing time difference between the lean vehicle 1 and the vehicle behind is shorter than the reference time difference and where the relative speed information is the information indicating that the absolute value of the relative speed between the lean vehicle 1 and the vehicle behind is lower than the reference speed.

The above description has been made on the example in which the following case corresponds to the case where the following safety is lower than the standard. In such a case, it is determined that the vehicle behind possibly collides with the lean vehicle 1 (that is, there is the potential collision possibility) when the lean vehicle 1 brakes suddenly while the lean vehicle 1 travels by being followed by the vehicle behind. However, the following case may correspond to the case where the following safety is lower than the standard. In such a case, based on the relative position, the relative distance, the relative speed, the relative acceleration, or the like between the lean vehicle 1 and the vehicle behind, it is determined that the vehicle behind possibly collides with the lean vehicle 1 even when the lean vehicle 1 does not brake suddenly.

If it is determined that the following safety of the vehicle behind to follow the lean vehicle 1 is lower than the standard (step S108/YES), the processing returns to step S102. On the other hand, if it is determined that the following safety of the vehicle behind to follow the lean vehicle 1 is higher than the standard (step S108/NO), the processing proceeds to step S109.

If it is determined NO in step S108, in step S109, the execution section 22 executes the second speed adjustment assistance operation as the speed adjustment assistance operation, which is the operation to assist with the speed adjustment for moving the lean vehicle 1 away from the vehicle ahead 2. Then, the processing returns to step S102.

The second speed adjustment assistance operation is operation to automatically adjust the speed without relying on the rider's operation. For example, in the second speed adjustment assistance operation, the execution section 22 reduces drive power generated to the lean vehicle 1 by controlling the operation of the engine 11. As a result, the lean vehicle 1 can forcibly be moved away from the vehicle ahead 2.

However, the second speed adjustment assistance operation may be operation to automatically adjust the speed by a method other than the above method. For example, in the second speed adjustment assistance operation, the execution section 22 may generate the braking force to the lean vehicle 1 or increase the braking force generated to the lean vehicle 1 by controlling the operation of the hydraulic pressure control unit 12. Alternatively, for example, in the second speed adjustment assistance operation, in addition to the reduction in the drive power generated to the lean vehicle 1, the execution section 22 may generate the braking force to the lean vehicle 1 or increase the braking force generated to the lean vehicle 1.

Here, in the second speed adjustment assistance operation, the execution section 22 may change a speed change, which is automatically generated to the lean vehicle 1 by the speed adjustment, according to the following safety of the lean vehicle 1 to follow the vehicle ahead 2. For example, in the second speed adjustment assistance operation, the execution section 22 may increase a change amount of the speed change, which is automatically generated to the lean vehicle 1 by the speed adjustment, as the following safety of the lean vehicle 1 to follow the vehicle ahead 2 is lowered. As a result, a magnitude of the speed adjustment can be optimized according to the following safety of the lean vehicle 1 to follow the vehicle ahead 2.

In the second speed adjustment assistance operation, the execution section 22 may automatically adjust the speed by outputting the control command to the control section that controls the rotation of the accelerator grip 19. For example, the control command may be a control command to increase a restoring force that acts on the accelerator grip 19 (more specifically, an urging force by a spring or the like that restores the accelerator grip 19 to a position with no load in a rotational direction). As a result of the output of such a control command, the rider finds a difficulty in rotating the accelerator grip 19 in a direction to increase an operation amount of the accelerator grip 19. Alternatively, for example, the control command may be a control command to forcibly rotate the accelerator grip 19 in a direction to reduce the operation amount of the accelerator grip 19.

The above description has been made on the example in which, in the second speed adjustment assistance operation, the speed is automatically adjusted by controlling at least one of the drive power and the braking force acting on the lean vehicle 1 and on the example in which, in the second speed adjustment assistance operation, the speed is automatically adjusted by controlling the rotation of the accelerator grip 19. However, in the second speed adjustment assistance operation, the speed may automatically be adjusted by executing both of the control of at least one of the drive power and the braking force acting on the lean vehicle 1 and the control of the rotation of the accelerator grip 19.

As it has been described so far, during the execution of the speed control, in the case where the determination section 23 determines that the following safety of the lean vehicle 1 to follow the vehicle ahead 2 is lower than the standard, the execution section 22 of the controller 20 executes the speed adjustment assistance operation that is the operation to assist with the speed adjustment for moving the lean vehicle 1 away from the vehicle ahead 2. As a result, during the execution of the speed control, even in the case where the situation arises where the lean vehicle 1 travels near the vehicle ahead 2, such a situation can be eliminated by executing the speed adjustment assistance operation. Therefore, it is possible to optimize the positional relationship between the lean vehicle 1 and the vehicle ahead 2.

The above description has been made on the processing example executed by the controller 20 with reference to the flowchart in Fig. 4. However, the processing executed by the controller 20 may be processing that is obtained by modifying the above-described processing example.

In the above-described processing example, both of the first speed adjustment assistance operation and the second speed adjustment assistance operation are executed as the speed adjustment assistance operation. However, only one of the first speed adjustment assistance operation and the second speed adjustment assistance operation may be executed as the speed adjustment assistance operation.

In the above-described processing example, the execution section 22 changes whether to execute the second speed adjustment assistance operation on the basis of the determination result of the following safety of the vehicle behind, which is located behind the lean vehicle 1, to follow the lean vehicle 1. However, a method for using the determination result of the following safety of the vehicle behind, which is located behind the lean vehicle 1, to follow the lean vehicle 1 may be a use method other than the above.

For example, the execution section 22 may change whether to execute the first speed adjustment assistance operation on the basis of the determination result of the following safety of the vehicle behind, which is located behind the lean vehicle 1, to follow the lean vehicle 1. For example, in the case where it is determined that the following safety of the vehicle behind to follow the lean vehicle 1 is lower than the standard, the execution section 22 may prohibit the first speed adjustment assistance operation.

For example, the execution section 22 may change a degree of restriction on the speed adjustment assistance operation on the basis of the determination result of the following safety of the vehicle behind, which is located behind the lean vehicle 1, to follow the lean vehicle 1. For example, in the case where it is determined that the following safety of the vehicle behind to follow the lean vehicle 1 is lower than the standard, the execution section 22 may reduce the change amount of the speed change, which is automatically generated to the lean vehicle 1 by the speed adjustment in the second speed adjustment assistance operation, to be smaller than that in the case where it is determined that the following safety is higher than the standard. Alternatively, for example, in the case where it is determined that the following safety of the vehicle behind to follow the lean vehicle 1 is lower than the standard, the execution section 22 may reduce perceptibility of the notification in the first speed adjustment assistance operation (for example, a display range may be narrowed, or display brightness may be lowered) to be lower than that in the case where the following safety is higher than the standard.

That is, the determination result of the following safety of the vehicle behind, which is located behind the lean vehicle 1, to follow the lean vehicle 1 can widely be used for the restriction on the speed adjustment assistance operation. In other words, the execution section 22 can restrict the speed adjustment assistance operation on the basis of the determination result of the following safety of the vehicle behind, which is located behind the lean vehicle 1, to follow the lean vehicle 1. However, the following safety of the vehicle behind, which is located behind the lean vehicle 1, to follow the lean vehicle 1 may not be determined (step S108 in the above example).

The controller 20 may determine a degree of straightness of the travel by the lean vehicle 1, and may restrict the speed adjustment assistance operation on the basis of a result of such a determination. Fig. 5 is a view illustrating a situation where the lean vehicle 1 and the vehicle ahead 2 are cornering. For example, as the determination on the degree of straightness of the travel by the lean vehicle 1, the determination section 23 determines whether the lean vehicle 1 is cornering. Then, based on such a determination result of the degree of straightness of the travel by the lean vehicle 1, the execution section 22 restricts the speed adjustment assistance operation.

For example, the determination section 23 can determine whether the lean vehicle 1 is cornering on the basis of posture information of the lean vehicle 1. The posture information is information on a posture of the lean vehicle 1. More specifically, the posture information is information on a physical quantity to which the posture of the lean vehicle 1, which is changed by cornering of the lean vehicle 1, is reflected. The posture information includes lean angle information of the lean vehicle 1, lateral acceleration information of the lean vehicle 1, steering angle information of the lean vehicle 1, and the like. The lean angle information and the lateral acceleration information can be acquired on the basis of the detection result by the IMU 16, for example. The steering angle information can be acquired on the basis of a detection result by a sensor that is provided to a steering to detect a steering angle, for example.

However, the determination section 23 may determine whether the lean vehicle 1 is cornering on the basis of information other than the posture information. For example, the determination section 23 may determine whether the lean vehicle 1 is cornering on the basis of map information acquired from a navigation system and location information of the lean vehicle 1.

The execution section 22 may change whether to execute the speed adjustment assistance operation on the basis of the determination result of the degree of straightness of the travel by the lean vehicle 1, for example. For example, the execution section 22 may prohibit the speed adjustment assistance operation in the case where it is determined that the lean vehicle 1 is cornering. Alternatively, the execution section 22 may change a degree of restriction on the speed adjustment assistance operation on the basis of the determination result of the degree of straightness of the travel by the lean vehicle 1, for example. For example, in the case where it is determined that the lean vehicle 1 is cornering, the execution section 22 may reduce the change amount of the speed change, which is automatically generated to the lean vehicle 1 by the speed adjustment in the second speed adjustment assistance operation, to be smaller than that in the case where it is determined that the lean vehicle 1 is traveling straight. Alternatively, for example, in the case where it is determined that the lean vehicle 1 is cornering, the execution section 22 may reduce the perceptibility of the notification in the first speed adjustment assistance operation to be lower than that in the case where it is determined that the lean vehicle 1 is traveling straight.

### <Effects of Controller>

A description will be made on effects of the controller 20 according to the embodiment of the invention.

The controller 20 includes the execution section 22 that executes, as the rider-assistance operation to assist with driving by the rider, the speed control for controlling the speed of the lean vehicle 1 such that the positional relationship between the lean vehicle 1 and the vehicle ahead 2, which is located ahead of the lean vehicle 1, approaches the target state, which varies according to the operation amount of the accelerator operation, at least during the accelerator operation by the rider. The controller 20 further includes the determination section 23 that determines the following safety of the lean vehicle 1 to follow the vehicle ahead 2. During the speed control, the execution section 22 executes the speed adjustment assistance operation, which is the operation to assist with the speed adjustment for moving the lean vehicle 1 away from the vehicle ahead 2, in the case where the determination section 23 determines that the following safety of the lean vehicle 1 to follow the vehicle ahead 2 is lower than the standard. As a result, during the speed control, even in the case where the situation arises where the lean vehicle 1 travels near the vehicle ahead 2, such a situation can be eliminated by executing the speed adjustment assistance operation. Therefore, it is possible to optimize the positional relationship between the lean vehicle 1 and the vehicle ahead 2.

Preferably, in the controller 20, the determination section 23 determines the following safety of the lean vehicle 1 to follow the vehicle ahead 2 on the basis of the positional relationship information that is the information on the positional relationship between the lean vehicle 1 and the vehicle ahead 2. As a result, it is possible to appropriately determine the following safety of the lean vehicle 1 to follow the vehicle ahead 2 on the basis of the positional relationship between the lean vehicle 1 and the vehicle ahead 2. For example, based on the above positional relationship, it is possible to appropriately determine whether the lean vehicle 1 possibly collides with the vehicle ahead 2 when the vehicle ahead 2 brakes suddenly while the lean vehicle 1 travels by following the vehicle ahead 2.

Preferably, in the controller 20, the positional relationship information includes the density information, which is the information on the density between the lean vehicle 1 and the vehicle ahead 2. As a result, it is possible to further appropriately determine the following safety of the lean vehicle 1 to follow the vehicle ahead 2 on the basis of the density between the lean vehicle 1 and the vehicle ahead 2. For example, based on the above density, it is possible to further appropriately determine whether the lean vehicle 1 possibly collides with the vehicle ahead 2 when the vehicle ahead 2 brakes suddenly while the lean vehicle 1 travels by following the vehicle ahead 2.

Preferably, in the controller 20, the determination section 23 determines that the following safety of the lean vehicle 1 to follow the vehicle ahead 2 is lower than the standard in the case where the inter-vehicle distance information between the lean vehicle 1 and the vehicle ahead 2 as the density information is the information indicating that the inter-vehicle distance D1 between the lean vehicle 1 and the vehicle ahead 2 is shorter than the reference distance. As a result, the following safety of the lean vehicle 1 to follow the vehicle ahead 2 is appropriately determined by using the inter-vehicle distance information.

Preferably, in the controller 20, the determination section 23 determines that the following safety of the lean vehicle 1 to follow the vehicle ahead 2 is lower than the standard in the case where the passing time difference information between the lean vehicle 1 and the vehicle ahead 2 as the density information is the information indicating that the passing time difference between the lean vehicle 1 and the vehicle ahead 2 is shorter than the reference time difference. As a result, the following safety of the lean vehicle 1 to follow the vehicle ahead 2 is appropriately determined by using the passing time difference information.

Preferably, in the controller 20, the positional relationship information includes the stability information, which is the information on the stability of the inter-vehicle distance D1 between the lean vehicle 1 and the vehicle ahead 2. As a result, it is possible to further appropriately determine the following safety of the lean vehicle 1 to follow the vehicle ahead 2 on the basis of the stability of the inter-vehicle distance D1 between the lean vehicle 1 and the vehicle ahead 2. For example, based on the above stability, it is possible to further appropriately determine whether the lean vehicle 1 possibly collides with the vehicle ahead 2 when the vehicle ahead 2 brakes suddenly while the lean vehicle 1 travels by following the vehicle ahead 2.

Preferably, in the controller 20, the determination section 23 determines that the following safety of the lean vehicle 1 to follow the vehicle ahead 2 is lower than the standard in the case where the relative speed information between the lean vehicle 1 and the vehicle ahead 2 as the stability information is the information indicating that the absolute value of the relative speed between the lean vehicle 1 and the vehicle ahead 2 is lower than the reference speed. As a result, the following safety of the lean vehicle 1 to follow the vehicle ahead 2 is appropriately determined by using the relative speed information.

Preferably, in the controller 20, in the case where the determination that the following safety of the lean vehicle 1 to follow the vehicle ahead 2 is lower than the standard continues for the shorter time than the reference time, the execution section 22 does not execute the speed adjustment assistance operation. As a result, during the speed control, in the case where the situation where the lean vehicle 1 travels near the vehicle ahead 2 continues, such a situation can be eliminated by executing the speed adjustment assistance operation.

Preferably, in the controller 20, the execution section 22 makes the notification that instructs the rider to perform the speed adjustment operation in the speed adjustment assistance operation. As a result, the rider can be urged to perform the speed adjustment operation. Thus, when the rider performs the speed adjustment operation, the target inter-vehicle distance in the speed control is increased, and consequently, the lean vehicle 1 can be moved away from the vehicle ahead 2.

Preferably, in the controller 20, the execution section 22 automatically adjusts the speed without relying on the rider's operation in the speed adjustment assistance operation. As a result, the lean vehicle 1 can forcibly be moved away from the vehicle ahead 2 by executing the speed adjustment assistance operation.

Preferably, in the controller 20, the execution section 22 changes the speed change, which is automatically generated to the lean vehicle 1 by the speed adjustment, according to the following safety of the lean vehicle 1 to follow the vehicle ahead 2. As a result, the magnitude of the speed adjustment can be optimized according to the following safety of the lean vehicle 1 to follow the vehicle ahead 2.

Preferably, in the controller 20, the execution section 22 outputs the control command to the control section that controls the rotation of the accelerator grip 19, which accepts the accelerator operation, in the lean vehicle 1 in the speed adjustment assistance operation. As a result, by controlling the rotation of the accelerator grip 19, the speed adjustment assistance operation (for example, in the above example, both of the first speed adjustment assistance operation and the second speed adjustment assistance operation) can appropriately be executed.

Preferably, in the controller 20, the execution section 22 restricts the speed adjustment assistance operation on the basis of the determination result of the following safety of the vehicle behind, which is located behind the lean vehicle 1, to follow the lean vehicle 1. As a result, it is possible to optimize whether to execute the speed adjustment assistance operation or the degree of the restriction on the speed adjustment assistance operation according to the following safety of the vehicle behind to follow the lean vehicle 1. Therefore, for example, in the case where the following safety of the vehicle behind to follow the lean vehicle 1 is lower than the standard, it is possible to suppress contact between the vehicle behind and the lean vehicle 1, which is caused by the execution of the speed adjustment assistance operation.

Preferably, in the controller 20, the execution section 22 restricts the speed adjustment assistance operation on the basis of the determination result of the degree of straightness of the travel by the lean vehicle 1. As a result, it is possible to optimize whether to execute the speed adjustment assistance operation or the degree of the restriction on the speed adjustment assistance operation according to whether the lean vehicle 1 is cornering. Therefore, for example, in the case where the lean vehicle 1 is cornering, it is possible to prevent the rider from having a sense of discomfort due to the increase in the inter-vehicle distance D1 between the lean vehicle 1 and the vehicle ahead 2. In addition, for example, in the case where the lean vehicle 1 is cornering, it is possible to prevent a reduction in the rider's concentration due to the execution of the first speed adjustment assistance operation.

The invention is not limited to the embodiment that has been described. For example, only a part of the embodiment may be implemented.

### Reference Signs List

1: Lean vehicle
2: Vehicle ahead
10: Rider-assistance system
11: Engine
12: Hydraulic pressure control unit
13: Display device
14: Input device
15: Surrounding environment sensor
15f: Front surrounding environment sensor
15r: Rear surrounding environment sensor
16: IMU
17: Front-wheel rotational frequency sensor
18: Rear-wheel rotational frequency sensor
19: Accelerator grip
20: Controller
21: Acquisition section
22: Execution section
23: Determination section
D1: Inter-vehicle distance

## Claims

1. A controller (20) for a rider-assistance system (10) that assists with driving by a rider of a lean vehicle (1), the controller comprising:
an execution section (22) that executes, as rider-assistance operation to assist with driving by the rider, speed control at least during an accelerator operation by the rider, the speed control being executed to control a speed of the lean vehicle (1) such that a positional relationship between the lean vehicle (1) and a vehicle ahead (2) located ahead of the lean vehicle (1) approaches a target state that varies according to an operation amount of the accelerator operation, and further comprising:
a determination section (23) that determines following safety of the lean vehicle (1) to follow the vehicle ahead (2), wherein
during execution of the speed control, in the case where the determination section (23) determines that the following safety is lower than a standard, the execution section (22) executes speed adjustment assistance operation that is operation to assist with speed adjustment for moving the lean vehicle (1) away from the vehicle ahead (2).

2. The controller according to claim 1, wherein
the determination section (23) determines the following safety on the basis of positional relationship information that is information on the positional relationship.

3. The controller according to claim 2, wherein
the positional relationship information includes density information that is information on density between the lean vehicle (1) and the vehicle ahead (2).

4. The controller according to claim 3, wherein
the determination section (23) determines that the following safety is lower than the standard in the case where inter-vehicle distance information between the lean vehicle (1) and the vehicle ahead (2) as the density information is information indicating that an inter-vehicle distance (D1) between the lean vehicle (1) and the vehicle ahead (2) is shorter than a reference distance.

5. The controller according to claim 3, wherein
the determination section (23) determines that the following safety is lower than the standard in the case where passing time difference information between the lean vehicle (1) and the vehicle ahead (2) as the density information is information indicating that a passing time difference between the lean vehicle (1) and the vehicle ahead (2) is shorter than a reference time difference.

6. The controller according to any one of claims 2 to 5, wherein
the positional relationship information includes stability information that is information on stability of an inter-vehicle distance (D1) between the lean vehicle (1) and the vehicle ahead (2).

7. The controller according to claim 6, wherein
the determination section (23) determines that the following safety is lower than the standard in the case where relative speed information between the lean vehicle (1) and the vehicle ahead (2) as the stability information is information indicating that an absolute value of a relative speed between the lean vehicle (1) and the vehicle ahead (2) is lower than a reference speed.

8. The controller according to claim 1 or 2, wherein
in the case where the determination that the following safety is lower than the standard continues for a shorter time than a reference time, the execution section (22) does not execute the speed adjustment assistance operation.

9. The controller according to claim 1, wherein
in the speed adjustment assistance operation, the execution section (22) makes a notification that instructs the rider to perform an operation for the speed adjustment.

10. The controller according to claim 1, wherein
in the speed adjustment assistance operation, the execution section (22) automatically executes the speed adjustment without relying on the rider's operation.

11. The controller according to claim 10, wherein
the execution section (22) changes a speed change, which is automatically generated to the lean vehicle (1) by the speed adjustment, according to the following safety.

12. The controller according to any one of claims 9 to 11, wherein
in the speed adjustment assistance operation, the execution section (22) outputs a control command to a control section that controls rotation of an accelerator grip (19), which accepts the accelerator operation, in the lean vehicle (1).

13. The controller according to claim 1, 2, 9, or 10, wherein
the execution section (22) restricts the speed adjustment assistance operation on the basis of a determination result of following safety of a vehicle behind, which is located behind the lean vehicle (1), to follow the lean vehicle (1).

14. The controller according to claim 1, 2, 9, or 10, wherein
the execution section (22) restricts the speed adjustment assistance operation on the basis of a determination result of a degree of straightness of travel by the lean vehicle (1).

15. A control method for a rider-assistance system (10) that assists with driving by a rider of a lean vehicle (1), the control method comprising:
executing, as rider-assistance operation to assist with driving by the rider, speed control by an execution section (22) of a controller (20) at least during an accelerator operation by the rider, the speed control being executed to control a speed of the lean vehicle (1) such that a positional relationship between the lean vehicle (1) and a vehicle ahead (2) located ahead of the lean vehicle (1) approaches a target state that varies according to an operation amount of the accelerator operation, and further comprising:
determining following safety of the lean vehicle (1) to follow the vehicle ahead (2) by a determination section (23) of the controller (20), wherein
during execution of the speed control, in the case where the determination section (23) determines that the following safety is lower than a standard, the execution section (22) executes speed adjustment assistance operation that is operation to assist with speed adjustment for moving the lean vehicle (1) away from the vehicle ahead (2).
